# EUROPEAN PATENT APPLICATION

(11) **EP 4 575 944 A1**
(43) Date of publication of application: **25.06.2025**
(21) Application number: 23218839.1
(22) Date of filing: 20.12.2023
(51) Int. Cl.: G06Q 10/06

(54) **BATTERY REPLACEMENT**

(71) Applicant: VOLVO TRUCK CORPORATION, 405 08 Göteborg (SE)
(72) Inventor: SINGH, Gurpreet, 421 39 VÄSTRA FRÖLUNDA (SE)
(74) Representative: Ström & Gulliksson AB

(57) **Abstract**

A computer system (100) comprising processing circuitry (110) is presented. The processing circuitry (110) is configured to obtain target battery historic usage data (210) of an initial battery (200) targeted for replacement and to obtain a plurality of candidate battery historic usage data (310a, 310b, 310c, 3 10d). Each candidate battery historic usage data (310a, 310b, 310c, 310d) is associated with a specific replacement candidate battery (300a, 300b, 300c, 300d). The processing circuitry (110) is further configured to select a specific replacement candidate battery (300a, 300b, 300c, 300d) as a replacement battery for the initial battery (200) based on a comparison of the target battery historic usage data (210) to the candidate battery historic usage data (310a, 310b, 310c, 310d).

## Description

### TECHNICAL FIELD

The disclosure relates generally to electrical power and batteries. In particular aspects, the disclosure relates to replacement of batteries. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Global electrification of vehicles increases demand for electrical storages such as batteries. To compensate for fluctuating electricity pricing and enable off-grid operation, domestic batteries are provided which further increase the demand for electrical storages.

Batteries have a limited lifetime and may eventually have to be replaced. Moreover, electrical vehicles may be damaged in accidents forcing them to be scrapped although their batteries may still be usable.

However, replacing a battery with a used battery is not something that is easily done. The replacement battery generally has to be of the same type and chemistry as the battery to be replaced in that mixing different battery types or chemistries may lead to performance issues and potential safety hazards. Even following these principles, there is room for improvement when it comes to utilizing used batteries as replacement batteries.

### SUMMARY

According to a first aspect of the disclosure, a computer system comprising processing circuitry is presented. The processing circuitry is configured to obtain target battery historic usage data of an initial battery targeted for replacement and to obtain a plurality of candidate battery historic usage data, each candidate battery historic usage data being associated with a specific replacement candidate battery. The processing circuitry is further configured to select a specific replacement candidate battery as a replacement battery for the initial battery based on a comparison of the target battery historic usage data to the candidate battery historic usage data. The first aspect of the disclosure may seek to simplify and enable the use of used batteries as replacement batteries in applications. A technical benefit may include reduced environmental impact as used batteries may be reused and a total lifespan of batteries may be increased. This is provided with a reduced risk of reducing performance of the application.

Optionally in some examples, including in at least one preferred example, the target battery historic usage data and the candidate battery historic usage data comprise cycling age data of associated batteries, the cycling age data comprising one or more of upper charging limit data, lower discharging limit data, depth of discharge data, peak current data, average current data, energy throughput data, capacity throughput data, temperature data and/or usage time data. A technical benefit may include accurate matching of candidate batteries with target batteries targeted for replacement.

Optionally in some examples, including in at least one preferred example, the target battery historic usage data and the candidate battery historic usage data comprise calendric age data of associated batteries, the calendric age data comprising one or more of storage charge level data, storage time data and/or storage temperature data. A technical benefit may include accurate matching of candidate batteries with target batteries targeted for replacement.

Optionally in some examples, including in at least one preferred example, the target battery historic usage data and the candidate battery historic usage data comprises mechanical age data of associated batteries, the mechanical age data comprising vibration data and/or shock data. A technical benefit may include accurate matching of candidate batteries with target batteries targeted for replacement.

Optionally in some examples, including in at least one preferred example, the comparison of the target battery historic usage data to the candidate battery historic usage data comprises: rating each replacement candidate battery by determining a similarity of the candidate battery historic usage data and the target battery historic usage data. A technical benefit may include accurate matching of candidate batteries with target batteries targeted for replacement.

Optionally in some examples, including in at least one preferred example, the target battery historic usage data and the candidate battery historic usage data each comprises a plurality of different usage data parameters, and determining a similarity of the candidate battery historic usage data and the target battery historic usage data comprises weighting the respective usage data parameters of the candidate battery historic usage data and the target battery historic usage data. A technical benefit may include accurate matching of candidate batteries with target batteries targeted for replacement.

Optionally in some examples, including in at least one preferred example, the processing circuitry is further configured to: obtain a state of health, SoH, of the initial battery; obtain a SoH of one or more of the specific replacement candidate batteries; and select a specific replacement candidate battery as the replacement battery further based on a comparison of the SoH of the initial battery to SoHs of the one or more of the specific replacement candidate batteries. A technical benefit may include accurate matching of candidate batteries with target batteries targeted for replacement.

Optionally in some examples, including in at least one preferred example, the target battery historic usage data and the candidate battery historic usage data comprise cycling age data of associated batteries, the cycling age data comprising one or more of upper charging limit data, lower discharging limit data, depth of discharge data, peak current data, average current data, energy throughput data, capacity throughput data, temperature data and/or usage time data; the target battery historic usage data and the candidate battery historic usage data comprise calendric age data of associated batteries, the calendric age data comprising one or more of storage charge level data, storage time data and/or storage temperature data; the target battery historic usage data and the candidate battery historic usage data comprises mechanical age data of associated batteries, the mechanical age data comprising vibration data and/or shock data; the comparison of the target battery historic usage data to the candidate battery historic usage data comprises: rating each replacement candidate battery by determining a similarity of the candidate battery historic usage data and the target battery historic usage data; the target battery historic usage data and the candidate battery historic usage data each comprises a plurality of different usage data parameters, and determining a similarity of the candidate battery historic usage data and the target battery historic usage data comprises weighting the respective usage data parameters of the candidate battery historic usage data and the target battery historic usage data; the processing circuitry is further configured to: obtain a state of health, SoH, of the initial battery; obtain a SoH of one or more of the specific replacement candidate batteries; and select a specific replacement candidate battery as the replacement battery further based on a comparison of the SoH of the initial battery to SoHs of the one or more of the specific replacement candidate batteries; and obtaining target battery historic usage data of the initial battery comprises: obtaining at least part of the target battery historic usage data from a non-volatile data storage of the initial battery and/or a cloud server. A technical benefit may include accurately matching of candidate batteries with target batteries targeted for replacement. A technical benefit may include accurate matching of candidate batteries with target batteries targeted for replacement and convenient obtaining of the target battery historic usage data.

According to a second aspect of the disclosure, an energy storage system is presented. The energy storage system comprises at least one battery and processing circuitry configured to store usage data of the at least one battery as target battery historic usage data for use as target battery historic usage data and/or candidate battery historic usage data by the computer system of the first aspect, preferably the energy storage system further comprises a non-volatile data storage configured to store the usage data. The second aspect of the disclosure may seek to simplify and enable the use of used batteries as replacement batteries in applications. A technical benefit may include reduced environmental impact as used batteries may be reused and a total lifespan of batteries may be increased. This is provided with a reduced risk of reducing performance of the application.

According to a third aspect of the disclosure, a vehicle comprising the energy storage system of the second aspect is presented. The third aspect of the disclosure may seek to simplify and enable the use of used batteries as replacement batteries in applications. A technical benefit may include reduced environmental impact as used batteries may be reused and a total lifespan of batteries may be increased. This is provided with a reduced risk of reducing performance of the application.

According to a fourth aspect of the disclosure, a computer-implemented method is presented. The method comprises obtaining, by processing circuitry of a computer system, target battery historic usage data of an initial battery targeted for replacement; obtaining, by processing circuitry of the computer system, a plurality of candidate battery historic usage data, each candidate battery historic usage data being associated with a specific replacement candidate battery; and selecting, by processing circuitry of the computer system, a specific replacement candidate battery as replacement battery for the initial battery based on comparing, by processing circuitry of the computer system, the target battery historic usage data to the candidate battery historic usage data. The fourth aspect of the disclosure may seek to simplify and enable the use of used batteries as replacement batteries in applications. A technical benefit may include reduced environmental impact as used batteries may be reused and a total lifespan of batteries may be increased. This is provided with a reduced risk of reducing performance of the application.

Optionally in some examples, including in at least one preferred example, comparing the target battery historic usage data to the candidate battery historic usage data comprises: rating, by processing circuitry of the computer system, each replacement candidate battery by determining, by processing circuitry of the computer system, a similarity of the candidate battery historic usage data and the target battery historic usage data. A technical benefit may include accurate matching of candidate batteries with target batteries targeted for replacement.

Optionally in some examples, including in at least one preferred example, the target battery historic usage data and the candidate battery historic usage data each comprises a plurality of different usage data parameters, and determining a similarity of the candidate battery historic usage data and the target battery historic usage data comprises: weighting, by processing circuitry of the computer system, the respective usage data parameters of the candidate battery historic usage data and the target battery historic usage data. A technical benefit may include accurate matching of candidate batteries with target batteries targeted for replacement.

According to a fifth aspect of the disclosure, a computer program product is presented. The computer program product comprises program code for performing, when executed by processing circuitry, the method of the fourth aspect. The fifth aspect of the disclosure may seek to simplify and enable the use of used batteries as replacement batteries in applications. A technical benefit may include reduced environmental impact as used batteries may be reused and a total lifespan of batteries may be increased. This is provided with a reduced risk of reducing performance of the application.

According to a sixth aspect of the disclosure, a non-transitory computer-readable storage medium is presented. The non-transitory computer-readable storage medium comprises instructions, which when executed by processing circuitry, cause the processing circuitry to perform the method of the fourth aspect. The sixth aspect of the disclosure may seek to simplify and enable the use of used batteries as replacement batteries in applications. A technical benefit may include reduced environmental impact as used batteries may be reused and a total lifespan of batteries may be increased. This is provided with a reduced risk of reducing performance of the application.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary schematic view of a vehicle according to an example.
**FIG. 2** is an exemplary schematic view of a computer system according to an example.
**FIG. 3** is an exemplary schematic view of a replacement battery selection manager according to an example.
**FIG. 4** is an exemplary schematic view of a computer system according to an example.
**FIG. 5** is an exemplary schematic view of a method according to an example.
**FIG. 6** is an exemplary schematic view of a computer program product according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As mentioned, replacing a battery is a complex task that may, if done incorrectly, decrease performance of the device powered by the battery. This is specifically the case when one battery of a group of batteries is to be replaced. Preferably, the replacing battery should, within reason, match the specifications of the other batteries in the group of batteries. If the specification of the replacing battery fails to reach the specification of the other batteries of the group of batteries, the performance of the group of batteries may decrease. Correspondingly, if the specification of the replacing battery exceeds the specification of the other batteries of the group of batteries, the performance of the replacing battery may decrease.

If all batteries are new, replacing one battery may be a simple task of ensuring that specified chemistry, voltage and capacity of the batteries match when replacing one of the batteries. However, if the batteries have been used for a period time, replacing one battery with a new battery would be wasteful of the new battery. Replacing one battery with a used battery would be a lottery as performance of a battery will change over time depending on use. The present invention will enable matching of batteries when replacing batteries, even if both the replaced battery and replacing battery are used batteries. By comparing usage data of batteries, it is possible to use batteries having similar usage history as replacement batteries enabling reuse of used batteries with decreased risk of reducing performance of a system in which the batteries operate.

For the present disclosure, battery will be used as a general term and may be interpreted to mean battery cell, battery cell or a battery system. In general, battery is to be interpreted as the smallest replaceable electrical energy source of an energy storage device. For instance, in a battery back comprising a plurality of battery cell, a battery cell may be replaced and in a battery system comprising a plurality of battery packs, a battery pack may be replaced.

The teaching of the present application will be exemplified primarily from a perspective of replacing batteries in vehicles. However, as indicated above, the teachings are applicable to replacing of batteries in any application. Although the batteries are preferably rechargeable batteries, the teachings are applicable also to non-rechargeable batteries.

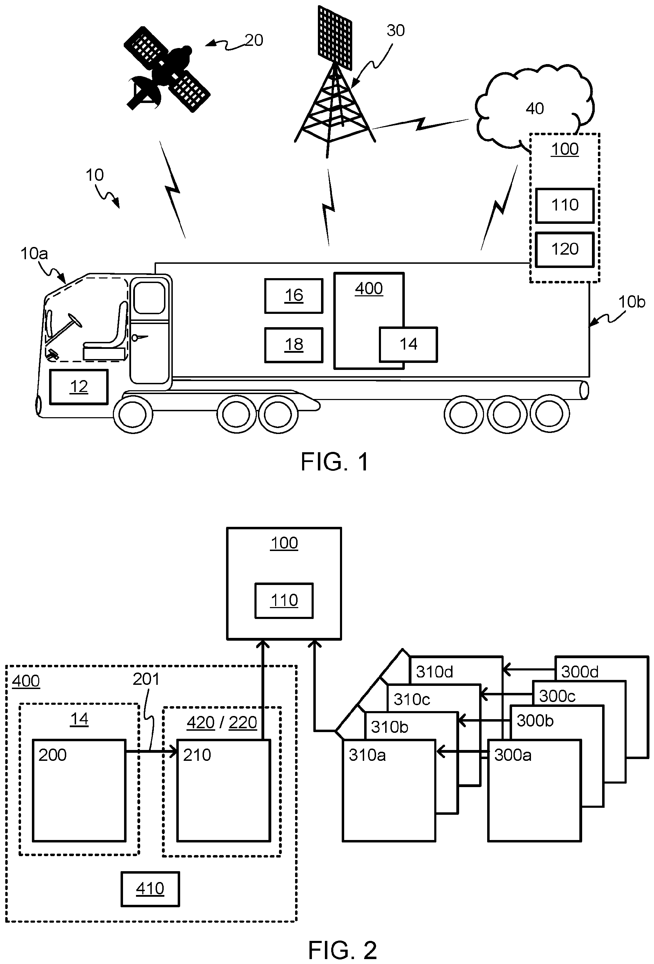

**FIG. 1** is an exemplary schematic side view of a heavy-duty vehicle **10** (hereinafter referred to as vehicle **10**). The vehicle **10** comprises a tractor unit **10a** which is arranged to tow a trailer unit **10b**. In other examples, other vehicles may be employed, e.g., trucks, buses, and construction equipment. The vehicle **10** comprises all vehicle units and associated functionality to operate as expected, such as a powertrain, chassis, and various control systems. The vehicle **10** comprises one or more propulsion sources **12.** The propulsion source **12** may be any suitable propulsion source **12** exemplified by, but not limited to, one or more or a combination of an electrical motor, a combustion engine such as a diesel, gas or gasoline powered engine. The vehicle **10** further comprises an energy source **14** suitable for providing energy for the propulsion source **12.** That is to say, if the propulsion source **12** is an electrical motor, a suitable energy source **14** would be a battery or a fuel cell. The vehicle **10** further comprises sensor circuitry **16** arranged to detect, measure, sense or otherwise obtain data relevant for operation of the vehicle **10.** The sensor circuit **16** may comprise one or more of a voltmeter, a current meter, an accelerometer, a gyroscope, a wheel speed sensor, an ABS sensor, a throttle position sensor, a fuel level sensor, a temperature sensor, a pressure sensor, a rain sensor, a light sensor, proximity sensor, a lane departure warning sensor, a blind spot detection sensor, a TPMS sensor etc. Operational data relevant for operation of the vehicle **10** may include, but is not limited to, one or more of a speed of the vehicle **10,** a weight of the vehicle **10,** an inclination of the vehicle **10,** a status of the energy source **14** of the vehicle **10** (state of charge, fuel level etc.), a current speed limit of a current road travelled by the vehicle **10,** etc. The vehicle **10** may further comprise communications circuitry **18** configured to receive and/or send communication. The communications circuitry **18** may be configured to enable the vehicle **10** to communicate with one or more external devices or systems such as a cloud server **40.** The communication with the external devices or systems may be directly or via a communications interface such as a cellular communications interface **30,** such as a radio base station. The cloud server **40** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **18** may, additionally or alternatively, be configured to enable the vehicle **10** to be operatively connected to a Global Navigation Satellite System (GNSS) **20** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **20** to determine a geographical location of the vehicle **10.**

In **FIG. 1** a computer system **100** is shown. The vehicle **10** may comprise some or all parts of the computer system **100** and/or the cloud server **40** may comprise some or all part of the computer system **100.** The computer system **100** may be operatively connected to the communications circuitry **18,** the sensor circuitry **16,** the energy source **14** and/or the propulsion source **12** of the vehicle **10.** The computer system **100** comprises processing circuitry **110.** The computer system **100** may comprise a storage device **120,** advantageously a non-volatile storage device such as a hard disk drives (HDDs), solid-state drives (SSDs) etc. In some examples, the storage device **120** is operatively connected to the computer system 100.

The vehicle **10** in **FIG. 1** is an, at least partly, electrically powered vehicle and further comprise an energy storage system **400.** The energy storage system **400** comprises at least one battery **14** that may form part of the energy source **14** of the vehicle **10.**

In **FIG. 2****,** a schematic view of the computer system **100** is shown. The computer system **100,** or rather the processing circuitry **110** of the computer system **100,** is configured to select a specific replacement candidate battery **300a, 300b, 300c, 300d** to replace an initial battery **200** targeted for replacement. The computer system **100** is configured to select the specific replacement candidate battery **300** based on a comparison between target battery historic usage data **210** and candidate battery historic usage data **310a, 310b, 310c, 310d.** Each candidate battery historic usage data **310a, 310b, 310c, 310d** is associated with a respective specific replacement candidate battery **300a, 300b, 300c, 300d**. The target battery historic usage data **210** and the candidate battery historic usage data **310a, 310b, 310c, 310d** will be further explained in coming sections.

The target battery historic usage data **210** may be obtained in any suitable way. In **FIG. 2****,** the initial battery **200** forms part of the energy storage system **400,** and specifically of the energy source **14** of the vehicle **10.** The initial battery **200** may be e.g. a battery pack of the energy storage system **400,** or a battery cell of a battery pack. In the latter case, the following example may be isolated to a battery pack rather than an energy storage system **400.** The energy storage system **400** comprise energy storage system processing circuitry **410** and optionally an energy storage system data storage **420.** The energy storage system processing circuitry **410** may form part of the processing circuitry **110** of the computer system **100** and/or the energy storage system data storage **420** may form part of the storage device **120** of the computer system **100.** The energy storage system processing circuitry **410** is configured to store, during use of the initial battery **200,** i.e. prior to it being replaced, usage data **201** of the initial battery **200.** The usage data **201** may be obtained by one or more suitable sensor circuitry **16** of the vehicle **10,** or sensor circuitry of the initial battery **200** or the energy storage system **400.** The usage data **201** may be stored at the energy storage system data storage **420** of the energy storage system **400,** at a data storage **220** of the initial battery **200** and/or at the data storage **120** of the computer system **100.** The data storage **120, 420** is preferably a non-volatile data storage such that the usage data **201** may be persistently stored even if e.g. power to the data storage **120, 420** is disrupted. The usage data **201** may be obtained by the computer system **100** as target battery historic usage data **210.** The candidate battery historic usage data **310a, 310b, 310c, 310d** may be provided correspondingly by storing usage data of the specific replacement candidate battery **300a, 300b, 300c, 300d.**

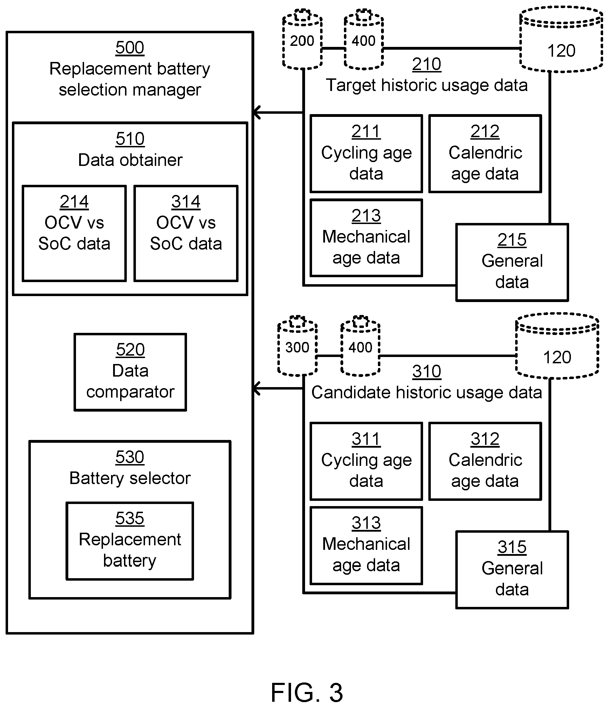

In **FIG. 3****,** a schematic view of replacement battery selector **500** is shown. The processing circuitry **110** of the computer system **100** may be configured to cause or perform some or all features, functionalities and examples of the replacement battery selector **500.** In some examples, energy storage system processing circuitry **410** may be configured to cause or perform some features, functionalities and examples of the replacement battery selector **500.** The replacement battery selector **500** comprises a data obtainer **510,** a data comparator **520** and a battery selector **530.**

The data obtainer 510 is configured to obtain target battery historic usage data **210** of an initial battery **200** targeted for replacement and to obtain a plurality of candidate battery historic usage data **310.** As previously mentioned, each candidate battery historic usage data **310** is associated with a specific replacement candidate battery **300.** The target battery historic usage data **210** may be obtained from e.g. the initial battery **200** (a storage device of the initial battery **200**), the storage device **120** or an energy storage system **400** in which the initial battery **200** has been operating. The candidate battery historic usage data **210** may be obtained from e.g. the candidate battery **300** (a storage device of the candidate battery **300**), the storage device **120** or an energy storage system **400** wherein the candidate battery **300** has been operating.

In some examples, the target historic usage data **210** and candidate battery historic usage data **310** may comprise general target data **215, 315.** The general target data **215, 315** may comprise general data such as, but not limited to, rated voltage, chemistry, a rated (i.e. factory specified, marked, etc.) capacity, physical dimension (rated size, weight, etc.), rated impedance, etc. The general target data **215, 315** may be provided stand-alone and is not necessarily part of the historic usage data **210, 310.**

In some examples, the general target data **215, 315** may comprise a state of health (SoH) of the battery **200, 300.** The SoH of a battery **200, 300** is a measure that indicates an overall condition and performance capability of the battery **200, 300** relative to an original or optimal state of the battery **200, 300.** SoH is commonly used for assessing a remaining useful life and functionality of a battery **200, 300.** SoH is often expressed as a percentage, where 100 % represents an initial or ideal health of the battery **200, 300,** and a lower percentage corresponds to a reduced health level of the battery **200, 300.**

Depending on the type (e.g. chemistry) of the battery **200, 300,** different historic usage data **210, 310** may be relevant. To exemplify, a Lithium-ion (Li-Ion) battery may age faster (e.g. loose capacity) if it is discharged and/or charged completely, a Nickel-Cadmium (NiCd) battery will age faster if it is not completely discharged and a Nickel-Metal-Hydrid (NiMh) battery will age faster if it is not fully charged. Consequently, the historic usage data **210, 310** provided may depend on the type of the battery **200, 300.**

In one example, the initial battery **200** and the replacement candidate batteries **300** are Li-Ion batteries. Li-ion batteries undergo a natural aging process over time due to a combination of chemical, physical, and environmental factors. Each charge and discharge cycle contributes to the degradation of the battery **200, 300.** Over time, the electrodes (anode and cathode) experience structural changes, leading to a gradual reduction in the battery's capacity. Even when not in use, Li-ion batteries undergo aging over time. This is referred to as calendar aging. The chemical reactions within the battery **200, 300** continue, leading to breakdown of electrode materials and a decrease in overall capacity. Exposure to high temperatures accelerates the aging process of Li-ion batteries. Elevated temperatures may cause faster chemical reactions, leading to increased degradation of the electrodes and a reduction in the battery's lifespan. Depth of discharge (DoD) indicate a depth to which a battery **200, 300** is discharged during each cycle and affects its lifespan. Deeper discharge cycles generally lead to faster degradation. Shallower discharge cycles and avoiding full discharges can help mitigate the impact of cycling on battery health. Operating a battery **200, 300** at high voltage levels or subjecting the battery **200, 300** to overcharging may accelerate aging. Elevated voltages may cause unwanted side reactions, leading to the formation of unstable compounds and degradation of the electrodes. Storing a Li-ion battery at high or low SoC for extended periods may contribute to aging. It is generally recommended to store Li-Ion batteries at moderate states of charge to minimize stress on the electrodes. Chemical changes in the electrolyte over time may impact the performance of the battery **200,** 300. These changes may include the formation of solid electrolyte interface (SEI) layers, which can affect the flow of ions within the battery. Materials used in the electrodes may undergo physical and chemical changes with repeated charge and discharge cycles. This may result in the formation of cracks, loss of active material, and changes in the structure of the electrodes. As a Li-ion battery ages, a capacity of the battery **200, 300** gradually decreases, and an internal resistance of the battery **200, 300** may increase. This leads to reduced energy storage and power delivery capabilities. Manufacturers often provide guidelines for maximizing the lifespan of lithium-ion batteries, including recommendations for charging, discharging, and storage conditions.

The target historic usage data **210** may comprise any data that is relevant for providing a suitable replacement candidate battery **300a, 300b, 300c, 300d** to the initial battery **200.** Preferably, the candidate battery historic usage data **310** comprise data corresponding to the target historic usage data **210** and the historic usage data **210, 310** will not be explained individually for each of the target historic usage data **210** and the candidate battery historic usage data **310.** The historic usage data **210, 310** may comprise different usage data parameters **211, 311, 212, 312, 213, 313** that may be exemplified by, but not limited to, cyclic age data **211, 311** calendric age data **212, 312** and/or mechanical age data **213, 313.**

The cycling age data **211, 311** comprise historic data of how the associated initial battery **200** or replacement candidate battery **300** has been cycled. The cycling age data **211, 311** may be exemplified, but not limited to, one or more of upper charging limit data, lower discharging limit data, depth of discharge data, peak current data, average current data, energy throughput data, capacity throughput data, temperature data and/or usage time data. The charging limit data may describe to what state of charge (SoC) or other suitable metric the battery **200, 300** has been charged/discharged. The charging/discharging limit data may indicate the maximum and/or minimum SoC the battery **200, 300** has been charged/discharged to. In some examples, the charging limit data may indicate a number of times the battery **200, 300** has been charged/discharged to the charging limit. Additionally, or alternatively, the cycling data **211, 311** may indicate a distribution (number of times, duration etc.) the battery **200, 300** has been at specific SoCs. Additionally, or alternatively, the cycling age data **211** may indicate currents drained and/or provided to the battery **200, 300.** In some examples, the current may be provided as a histogram (or similar data set) indicating number of times, and/or a duration a specific current has been drained and/or provided to the battery **200, 300.** In some examples, the cycling age data **211** may comprise peak and/or average current data indicating one or more of peak/average plugged in charging current data, peak/average regenerative charging current data and/or peak/average drainage current data. Additionally, or alternatively, the cycling data **211, 311** may indicate temperatures of the battery **200, 300,** i.e. an ambient (and/or internal) temperature of the battery **200, 300** during use. As with the currents, the temperature may be specified as minimum, maximum and/or average temperature during use and may be provided as a histogram (or similar data set) indicating number of times, and/or a duration a specific temperature has been experienced by the battery **200, 300.**

The calendric age data **212, 312** may comprise information of how old (in time) the battery **200, 300** is. The calendric age data **212, 312** may indicate a date of manufacture, a date of first use, a date or retirement etc. Additionally, or alternatively, the calendric age data **212, 312** may indicate a SOC of the battery **200, 300** during storage (before first use) and/or during retirement (after retirement). Additionally, or alternatively, the calendric age data **212, 312** may indicate a storage temperature of the battery **200, 300,** i.e. an ambient (and/or internal) temperature of the battery **200, 300** during storage.

The mechanical age data mechanical age data **213, 313** indicates one or more parameters relevant for estimating a mechanical age of the battery **200, 300.** In some examples, the mechanical age data **213, 313** indicates vibrations experienced by the battery **200, 300.** In some examples, the vibrations may be categorized with regards to e.g. frequency, amplitude etc. Additionally, or alternatively, the mechanical age data **213, 313** may comprise humidity data indicating a humidity (max, min, average, etc.) experienced by the battery **200, 300.**

In some examples, the data obtainer **510** may be configured to obtain open cell voltage, OCV, in relation to SOC data **214, 314** of the initial battery **200** and the specific replacement candidate battery **300.** The OCV in relation to SOC data **214, 314** may in some examples be obtained correspondingly to the historic usage data **210, 310.** In some examples, the OCV in relation to SOC data **214, 314** may be obtained by measuring, sensing or otherwise obtaining OCV data for different SOCs for the initial battery **200** and the specific replacement candidate battery **300.**

The data comparator **520** of the replacement battery selection manager **500** is configured to compare the target battery historic usage data **210** to the candidate battery historic usage data **310.** The comparison may be a data-point to data-point comparison between the target battery historic usage data **210** and the candidate battery historic usage data **310.** To exemplify, data indicative cycling age data **211** of the target battery historic usage data **210** is compared to corresponding cycling age data **311** of the candidate battery historic usage data **310.** The data comparator **520** may be configured to process the target battery historic usage data **210** and the candidate battery historic usage data **310** prior to the comparison and/or process a result of the comparison. To exemplify, the target battery historic usage data **210** and the candidate battery historic usage data **310** may be processed by averaging sampled data and/or detecting peak or minimum values prior to the comparison. The processing may be provided in addition to the data-point to data-point comparison in order to provide further data-points for comparison.

In some examples, wherein the OCV in relation to SOC data **214, 314** is provided, the data comparator **520** may compare the OCV in relation to SOC data **214** of the initial battery **200** to the OCV in relation to SOC data **314** of the replacement candidate batteries **300.**

In some examples, the data comparator **520** is configured to rate each replacement candidate battery **300** based on a similarity between the target battery historic usage data **210** and the candidate battery historic usage data **310.** The rating may comprise weighting the similarities between different candidate battery historic usage data **310** and their corresponding target battery historic usage data **210.** The weighing may be provided based on an importance of the respective historic usage data **210, 310.** To exemplify, cyclic age data **211, 311** may be considered more important than mechanical age data **213, 313** and similarities in cyclic age data **211, 311** are given a greater weight when rating the replacement candidate batteries **300.**

The battery selector **530** is configured to select one of the replacement candidate batteries **300** as a replacement battery **535** to the initial battery **200.** The battery selector **530** is configured to select the replacement battery **535** based on the comparison by the data comparator **520.**

In a non-limiting specific example, a replacement battery **535** may be selected by obtaining historic usage data **210, 310** of both the initial battery **200** and a plurality of candidate replacement batteries **300.** Tag all relevant historic usage data **210, 310** parameters on a scale from 1 to 10, where 1 belongs to mild regions of the parameter and 10 belongs to strong utilization regions of the parameter. To exemplify further, for a specific chemistry and battery design, a strong degradation may occur if the SoC of the batteries **200, 300** is in a region between 95 and 100 %. However for another chemistry a corresponding region may be between 90 and 100 %. To this end, as indicated above, importance and definition of pockets (i.e. bins of a histogram) to some degradation parameters are highly dependent on the battery chemistry and design. The historic usage data **210, 310** is weighted and a comparison between usage patterns of the batteries **200, 300** is determined. If the usage patterns of any two batteries **200, 300** match sufficiently, then the matching candidate replacement battery **300** may be considered as the replacement battery **535.** If usage patterns do not match (even if SoH values match), the candidate replacement battery **300** is not considered as the replacement battery **535.**

By enabling the teachings of the present disclosure, damaged batteries of a system may be replaced by used batteries without significantly affecting performance of other batteries in the system. This is environmentally sound as life-expectancy of the batteries of the system increases (less wear) and old used batteries may be given a second life in the system rather than being scrap.

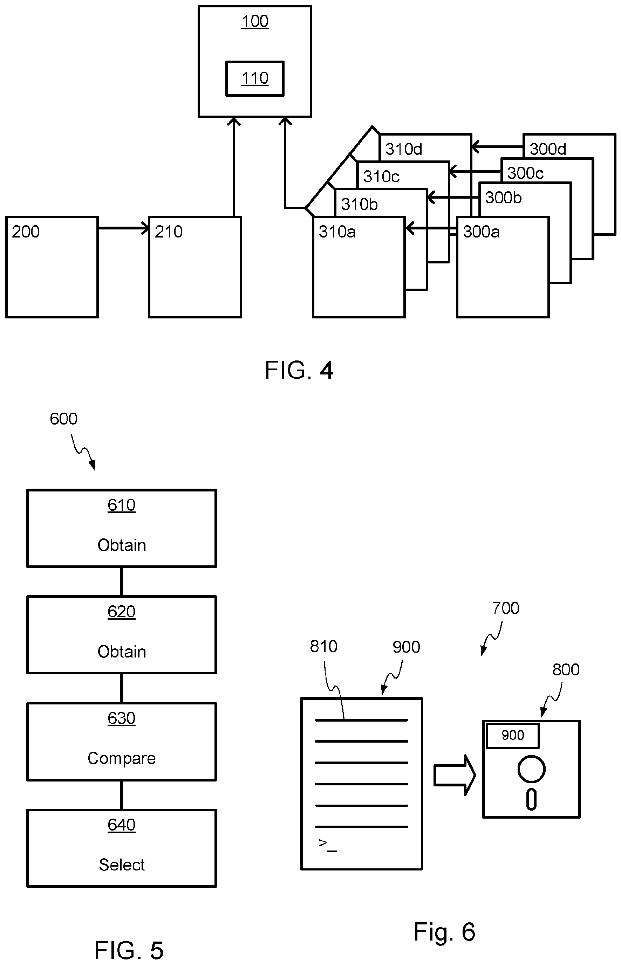

With reference to **FIG. 5****,** a computer system **100** comprising processing circuitry 110 is presented. The processing circuitry **110** is configured to obtain target battery historic usage data **210** of an initial battery **200** targeted for replacement and to obtain a plurality of candidate battery historic usage data **310a, 310b, 310c, 310d**. Each candidate battery historic usage data **310a, 310b, 310c, 310d** is associated with a specific replacement candidate battery **300a, 300b, 300c, 300d.** The processing circuitry **110** is further configured to select a specific replacement candidate battery **300a, 300b, 300c, 300d** as a replacement battery for the initial battery **200** based on a comparison of the target battery historic usage data **210** to the candidate battery historic usage data **310a, 310b, 310c, 310d.**

With reference to **FIG. 5****,** a block diagram of a method **600** is shown. The method 600 may be a computer implemented method **600.** The processing circuitry **110** of the computer system **100** may be configured to cause, and/or perform the method **600** in part or in full. In some examples, the processing circuitry **410** of the energy storage system **400** may be configured to cause, and/or perform the method **600** in part or in full.

The method **600** comprises obtaining **610** target battery historic usage data **210** of the initial battery **200** targeted for replacement. The method further comprises obtaining **620** a plurality of candidate battery historic usage data **310.** Each candidate battery historic usage data **310** is associated with a specific replacement candidate battery **300.** The obtaining **610, 620** may be provided in suitable manner such as exemplified by the data obtainer **510** referenced in **FIG. 3****.** The method **600** further comprises comparing **630** the target battery historic usage data **210** to the candidate battery historic usage data **310.** The comparing **630** may be provided in suitable manner such as exemplified by the data comparator **520** referenced in **FIG. 3****.** The method **600** further comprises selecting **640** a specific replacement candidate battery **300** as replacement battery **535** for the initial battery **200** based on the comparing **630.** The selecting **640** may be provided in suitable manner such as exemplified by the data selector **530** referenced in **FIG. 3****.**

The method **600** introduced in **FIG. 5** may be changed, expanded or otherwise altered to comprise any feature presented in the present disclosure and/or to provide any effect presented in the present disclosure.

In **FIG. 6** a computer program product **700** is shown. The computer program product **700** comprises a computer program **900** and a non-transitory computer readable medium **800.** The computer program **900** may be stored on the computer readable medium **800.** The computer readable medium **800** is, in **FIG. 6****,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **900** comprises instruction **910** e.g. program instruction, software code, that, when executed by processing circuitry cause the processing circuitry to perform the method **600** introduced with reference to **FIG. 5****.**

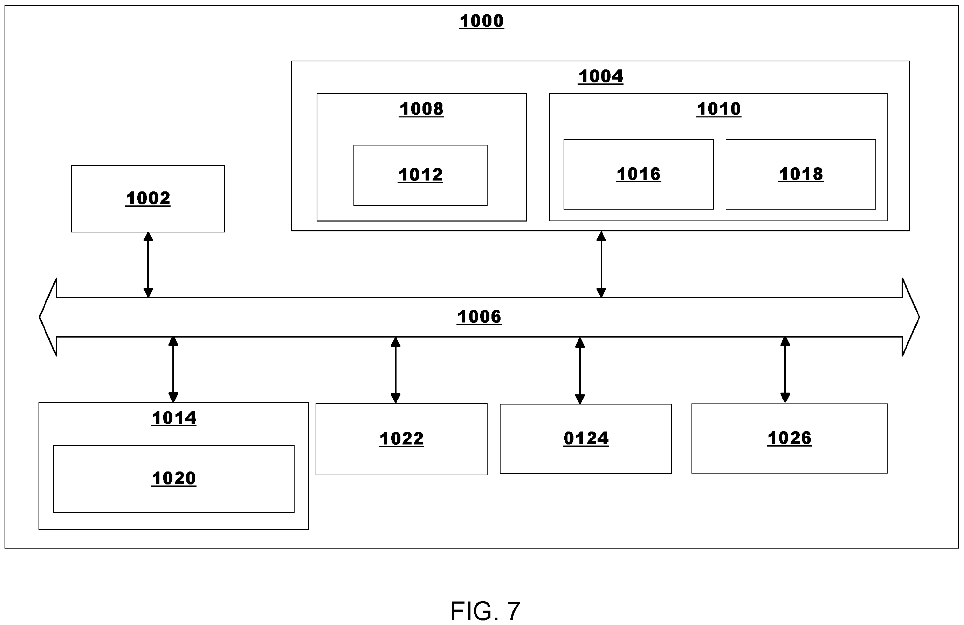

**FIG. 7** is a schematic diagram of a computer system **1000** for implementing examples disclosed herein. The computer system **1000** may be the computer system **100** introduced in reference to **FIG. 1****.** The computer system **1000** is adapted to execute instructions from a computer-readable medium to perform these and/or any of the functions or processing described herein. The computer system **1000** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **1000** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1000** may comprise at least one computing device or electronic device capable of including firmware, hardware, and/or executing software instructions to implement the functionality described herein. The computer system **1000** may include processing circuitry **1002** (e.g., processing circuitry including one or more processor devices or control units), a memory **1004,** and a system bus **1006.** The processing circuitry **1002** may be the processing circuitry **110** of the computer system **100** of **FIG. 1****.** The computer system **1000** may include at least one computing device having the processing circuitry **1002.** The system bus **1006** provides an interface for system components including, but not limited to, the memory **1004** and the processing circuitry **1002.** The processing circuitry **1002** may include any number of hardware components for conducting data or signal processing or for executing computer code stored in memory **1004.** The processing circuitry **1002** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1002** may further include computer executable code that controls operation of the programmable device.

The system bus **1006** may be any of several types of bus structures that may further interconnect to a memory bus (with or without a memory controller), a peripheral bus, and/or a local bus using any of a variety of bus architectures. The memory **1004** may be one or more devices for storing data and/or computer code for completing or facilitating methods described herein. The memory **1004** may include database components, object code components, script components, or other types of information structure for supporting the various activities herein. Any distributed or local memory device may be utilized with the systems and methods of this description. The memory **1004** may be communicably connected to the processing circuitry **1002** (e.g., via a circuit or any other wired, wireless, or network connection) and may include computer code for executing one or more processes described herein. The memory **1004** may include non-volatile memory **1008** (e.g., read-only memory (ROM), erasable programmable read-only memory (EPROM), electrically erasable programmable read-only memory (EEPROM), etc.), and volatile memory **1010** (e.g., random-access memory (RAM)), or any other medium which can be used to carry or store desired program code in the form of machine-executable instructions or data structures and which can be accessed by a computer or other machine with processing circuitry **1002.** A basic input/output system (BIOS) **1012** may be stored in the non-volatile memory **1008** and can include the basic routines that help to transfer information between elements within the computer system **1000.**

The computer system **1000** may further include or be coupled to a non-transitory computer-readable storage medium such as the storage device **1014,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1014** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1014** and/or in the volatile memory **1010,** which may include an operating system **1016** and/or one or more program modules **1018.** All or a portion of the examples disclosed herein may be implemented as a computer program **1020** stored on a transitory or non-transitory computer-usable or computer-readable storage medium (e.g., single medium or multiple media), such as the storage device **1014,** which includes complex programming instructions (e.g., complex computer-readable program code) to cause the processing circuitry **1002** to carry out actions described herein. Thus, the computer-readable program code of the computer program **1020** can comprise software instructions for implementing the functionality of the examples described herein when executed by the processing circuitry **1002.** In some examples, the storage device **1014** may be a computer program product (e.g., readable storage medium) storing the computer program **1020** thereon, where at least a portion of a computer program **1020** may be loadable (e.g., into a processor) for implementing the functionality of the examples described herein when executed by the processing circuitry **1002.** The processing circuitry **1002** may serve as a controller or control system for the computer system **1000** that is to implement the functionality described herein.

The computer system **1000** may include an input device interface **1022** configured to receive input and selections to be communicated to the computer system **1000** when executing instructions, such as from a keyboard, mouse, touch-sensitive surface, etc. Such input devices may be connected to the processing circuitry **1002** through the input device interface **1022** coupled to the system bus **1006** but can be connected through other interfaces, such as a parallel port, an Institute of Electrical and Electronic Engineers (IEEE) 1394 serial port, a Universal Serial Bus (USB) port, an IR interface, and the like. The computer system **1000** may include an output device interface **1024** configured to forward output, such as to a display, a video display unit (e.g., a liquid crystal display (LCD) or a cathode ray tube (CRT)). The computer system **1000** may include a communications interface **1026** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system **100** comprising processing circuitry **110** configured to: obtain target battery historic usage data **210** of an initial battery **200** targeted for replacement; obtain a plurality of candidate battery historic usage data **310,** each candidate battery historic usage data **310** being associated with a specific replacement candidate battery **300;** and select a specific replacement candidate battery **300** as a replacement battery **535** for the initial battery **200** based on a comparison of the target battery historic usage data **210** to the candidate battery historic usage data **310.**

Example 2. The computer system **100** of example 1, wherein the target battery historic usage data **210** and the candidate battery historic usage data **310** comprise cycling age data **211, 311** of associated batteries **200, 300,** the cycling age data **211, 311** comprising one or more of upper charging limit data, lower discharging limit data, depth of discharge data, peak current data, average current data, energy throughput data, capacity throughput data, temperature data and/or usage time data.

Example 3. The computer system **100** of example 2, wherein the cycling age data **211, 311** comprises peak current data, wherein the peak current data indicate one or more of peak plugged in charging current data, peak regenerative charging current data and /or peak drainage current data.

Example 4. The computer system **100** of example 2 or 3, wherein the cycling age data **211, 311** comprises average current data, wherein the average current data indicate one or more of average plugged in charging current data, average regenerative charging current data and /or average drainage current data.

Example 5. The computer system **100** of any one of examples 1 to 4, wherein the target battery historic usage data **210** and the candidate battery historic usage data **310** comprise calendric age data **212, 312** of associated batteries **200, 300,** the calendric age data **212, 312** comprising one or more of storage charge level data, storage time data and/or storage temperature data.

Example 6. The computer system **100** of any one of examples 1 to 5, wherein the target battery historic usage data **210** and the candidate battery historic usage data **310** comprises mechanical age data **213, 313** of associated batteries **200, 300,** the mechanical age data comprising vibration data and/or shock data.

Example 7. The computer system **100** of any one of examples 1 to 6, wherein the comparison of the target battery historic usage data **210** to the candidate battery historic usage data **310** comprises: rating each replacement candidate battery **300** by determining a similarity of the candidate battery historic usage data **310** and the target battery historic usage data **210.**

Example 8. The computer system **100** of any one of examples 1 to 7, wherein the target battery historic usage data **210** and the candidate battery historic usage data **310** each comprises a plurality of different usage data parameters **211, 212, 213, 214, 215, 311, 312, 313, 314, 315,** and determining a similarity of the candidate battery historic usage data **310** and the target battery historic usage data **210** comprises weighting the respective usage data parameters **211, 212, 213, 214, 215, 311, 312, 313, 314, 315** of the candidate battery historic usage data **310** and the target battery historic usage data **210.**

Example 9. The computer system **100** of any one of examples 1 to 8, wherein obtaining target battery historic usage data **210** of the initial battery **200** comprises: obtaining at least part of the target battery historic usage data **210** from a non-volatile data storage **220** of the initial battery **200.**

Example 10. The computer system **100** of any one of examples 1 to 9, wherein obtaining target battery historic usage data **210** of the initial battery **200** comprises: obtaining at least part of the target battery historic usage data **210** from a server system **40.**

Example 11. The computer system **100** of any one of examples 1 to 10, wherein the processing circuitry **110** is further configured to: obtain a state of health, SoH, of the initial battery **200;** obtain a SoH of one or more of the specific replacement candidate batteries **300;** and select a specific replacement candidate battery **300** as the replacement battery **535** further based on a comparison of the SoH of the initial battery **200** to SoHs of the one or more of the specific replacement candidate batteries **300.**

Example 12. The computer system **100** of examples 1 to 11, wherein the processing circuitry **110** is further configured to: obtain open cell voltage, OCV, in relation to state of charge, SOC, data **214** of the initial battery **200;** obtain OCV in relation to SOC data **314** one or more of the specific replacement candidate batteries **300;** and select a specific replacement candidate battery **300** as replacement battery **535** further based on the OCV in relation to SOC data **214** of the initial battery **200,** to OCV in relation to SOC data **314** of the one or more of the specific replacement candidate batteries **300.**

Example 13. The computer system **100** of example 1, wherein the target battery historic usage data **210** and the candidate battery historic usage data **310** comprise cycling age data **211, 311** of associated batteries **200, 300,** the cycling age data **211, 311** comprising one or more of upper charging limit data, lower discharging limit data, depth of discharge data, peak current data, average current data, energy throughput data, capacity throughput data, temperature data and/or usage time data; wherein the cycling age data **211, 311** comprises peak current data, wherein the peak current data indicate one or more of peak plugged in charging current data, peak regenerative charging current data and /or peak drainage current data; wherein the cycling age data **211, 311** comprises average current data, wherein the average current data indicate one or more of average plugged in charging current data, average regenerative charging current data and /or average drainage current data; wherein the target battery historic usage data **210** and the candidate battery historic usage data **310** comprise calendric age data **212, 312** of associated batteries **200, 300,** the calendric age data **212, 312** comprising one or more of storage charge level data, storage time data and/or storage temperature data; wherein the target battery historic usage data **210** and the candidate battery historic usage data **310** comprises mechanical age data **213, 313** of associated batteries **200, 300,** the mechanical age data comprising vibration data and/or shock data; wherein the comparison of the target battery historic usage data **210** to the candidate battery historic usage data **310** comprises: rating each replacement candidate battery **300** by determining a similarity of the candidate battery historic usage data **310** and the target battery historic usage data **210;** wherein the target battery historic usage data **210** and the candidate battery historic usage data **310** each comprises a plurality of different usage data parameters **211, 212, 213, 214, 215, 311, 312, 313, 314, 315,** and determining a similarity of the candidate battery historic usage data **310** and the target battery historic usage data **210** comprises weighting the respective usage data parameters **211, 212, 213, 214, 215, 311, 312, 313, 314, 315** of the candidate battery historic usage data **310** and the target battery historic usage data **210;** wherein obtaining target battery historic usage data **210** of the initial battery **200** comprises: obtaining at least part of the target battery historic usage data **210** from a non-volatile data storage **220** of the initial battery **200;** wherein obtaining target battery historic usage data **210** of the initial battery **200** comprises: obtaining at least part of the target battery historic usage data **210** from a server system **40;** wherein the processing circuitry **110** is further configured to: obtain a state of health, SoH, of the initial battery **200;** obtain a SoH of one or more of the specific replacement candidate batteries **300;** and select a specific replacement candidate battery **300** as the replacement battery **535** further based on a comparison of the SoH of the initial battery **200** to SoHs of the one or more of the specific replacement candidate batteries **300;** wherein the processing circuitry **110** is further configured to: obtain open cell voltage, OCV, in relation to state of charge, SOC, data **214** of the initial battery **200;** obtain OCV in relation to SOC data **314** one or more of the specific replacement candidate batteries **300;** and select a specific replacement candidate battery **300** as replacement battery **535** further based on the OCV in relation to SOC data **214** of the initial battery **200,** to OCV in relation to SOC data **314** of the one or more of the specific replacement candidate batteries **300.**

Example 14. An energy storage system **400** comprising at least one battery **200** and processing circuitry **410** configured to store usage data **201** of the at least one battery **200** as target battery historic usage data **210** for use as target battery historic usage data **210** and/or candidate battery historic usage data **310** by the computer system **100** of any one of examples 1 to 13.

Example 15. The energy storage system **400** of example 14 further comprising a non-volatile data storage **420** configured to store the usage data **201.**

Example 16. A vehicle **10** comprising the energy storage system **400** of example 14 or 15.

Example 17. The vehicle **10** of example 16, wherein the vehicle **10** is a heavy-duty vehicle.

Example 18. A computer-implemented method **600,** comprising: obtaining **610,** by processing circuitry **110** of a computer system **100,** target battery historic usage data **210** of an initial battery **200** targeted for replacement; obtaining **620,** by processing circuitry **110** of the computer system **100,** a plurality of candidate battery historic usage data **310,** each candidate battery historic usage data **310** being associated with a specific replacement candidate battery **300;** and selecting **640,** by processing circuitry **110** of the computer system **100,** a specific replacement candidate battery **300** as replacement battery **535** for the initial battery **200** based on comparing **630,** by processing circuitry **110** of the computer system **100,** the target battery historic usage data **210** to the candidate battery historic usage data **310.**

Example 19. The computer implemented method **600** of example 18, wherein comparing **630** the target battery historic usage data **210** to the candidate battery historic usage data **310** comprises: rating, by processing circuitry **110** of the computer system **100,** each replacement candidate battery **300** by determining, by processing circuitry **110** of the computer system **100,** a similarity of the candidate battery historic usage data **310** and the target battery historic usage data **210.**

Example 20. The computer implemented method **600** of example 19, wherein the target battery historic usage data **210** and the candidate battery historic usage data **310** each comprises a plurality of different usage data parameters **211, 212, 213, 214, 215, 311, 312, 313, 314, 315,** and determining a similarity of the candidate battery historic usage data **310** and the target battery historic usage data **210** comprises: weighting, by processing circuitry **110** of the computer system **100,** the respective usage data parameters **211, 212, 213, 214, 215, 311, 312, 313, 314, 315** of the candidate battery historic usage data **310** and the target battery historic usage data **210.**

Example 21. The computer implemented method **600** of any one of examples 18 to 20, further comprising: obtaining, by processing circuitry **110** of the computer system **100,** a state of health, SoH, of the initial battery **200;** obtaining, by processing circuitry **110** of the computer system **100,** a SoH of one or more of the replacement candidate batteries ; and selecting, by processing circuitry **110** of the computer system **100,** a specific replacement candidate battery **300** as replacement battery **535** further based on a comparison of the SoH of the initial battery **200** to SoHs of the one or more of the specific replacement candidate batteries **300.**

Example 22. A computer program product **700** comprising program code **810** for performing, when executed by processing circuitry **110,** the method **600** of any of examples 18 to 21.

Example 23. A non-transitory computer-readable storage medium **800** comprising instructions **810,** which when executed by processing circuitry **110,** cause the processing circuitry **110** to perform the method of any of examples 18 to 21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (110) configured to:
obtain target battery historic usage data (210) of an initial battery (200) targeted for replacement;
obtain a plurality of candidate battery historic usage data (310), each candidate battery historic usage data (310) being associated with a specific replacement candidate battery (300); and
select a specific replacement candidate battery (300) as a replacement battery (535) for the initial battery (200) based on a comparison of the target battery historic usage data (210) to the candidate battery historic usage data (310).

2. The computer system (100) of claim 1, wherein the target battery historic usage data (210) and the candidate battery historic usage data (310) comprise cycling age data (211, 311) of associated batteries (200, 300), the cycling age data (211, 311) comprising one or more of upper charging limit data, lower discharging limit data, depth of discharge data, peak current data, average current data, energy throughput data, capacity throughput data, temperature data and/or usage time data.

3. The computer system (100) of claim 1 or 2, wherein the target battery historic usage data (210) and the candidate battery historic usage data (310) comprise calendric age data (212, 312) of associated batteries (200, 300), the calendric age data (212, 312) comprising one or more of storage charge level data, storage time data and/or storage temperature data.

4. The computer system (100) of any one of claims 1 to 3, wherein the target battery historic usage data (210) and the candidate battery historic usage data (310) comprises mechanical age data (213, 313) of associated batteries (200, 300), the mechanical age data comprising vibration data and/or shock data.

5. The computer system (100) of any one of claims 1 to 4, wherein the comparison of the target battery historic usage data (210) to the candidate battery historic usage data (310) comprises:
rating each replacement candidate battery (300) by determining a similarity of the candidate battery historic usage data (310) and the target battery historic usage data (210).

6. The computer system (100) of any one of claims 1 to 5, wherein the target battery historic usage data (210) and the candidate battery historic usage data (310) each comprises a plurality of different usage data parameters (211, 212, 213, 214, 215, 311, 312, 313, 314, 315), and determining a similarity of the candidate battery historic usage data (310) and the target battery historic usage data (210) comprises weighting the respective usage data parameters (211, 212, 213, 214, 215, 311, 312, 313, 314, 315) of the candidate battery historic usage data (310) and the target battery historic usage data (210).

7. The computer system (100) of any one of claims 1 to 6, wherein the processing circuitry (110) is further configured to:
obtain a state of health, SoH, of the initial battery (200);
obtain a SoH of one or more of the specific replacement candidate batteries (300); and
select a specific replacement candidate battery (300) as the replacement battery (535) further based on a comparison of the SoH of the initial battery (200) to SoHs of the one or more of the specific replacement candidate batteries (300).

8. The computer system (100) of claim 1, wherein the target battery historic usage data (210) and the candidate battery historic usage data (310) comprise cycling age data (211, 311) of associated batteries (200, 300), the cycling age data (211, 311) comprising one or more of upper charging limit data, lower discharging limit data, depth of discharge data, peak current data, average current data, energy throughput data, capacity throughput data, temperature data and/or usage time data; wherein the target battery historic usage data (210) and the candidate battery historic usage data (310) comprise calendric age data (212, 312) of associated batteries (200, 300), the calendric age data (212, 312) comprising one or more of storage charge level data, storage time data and/or storage temperature data; wherein the target battery historic usage data (210) and the candidate battery historic usage data (310) comprises mechanical age data (213, 313) of associated batteries (200, 300), the mechanical age data comprising vibration data and/or shock data; wherein the comparison of the target battery historic usage data (210) to the candidate battery historic usage data (310) comprises: rating each replacement candidate battery (300) by determining a similarity of the candidate battery historic usage data (310) and the target battery historic usage data (210); wherein the target battery historic usage data (210) and the candidate battery historic usage data (310) each comprises a plurality of different usage data parameters (211, 212, 213, 214, 215, 311, 312, 313, 314, 315), and determining a similarity of the candidate battery historic usage data (310) and the target battery historic usage data (210) comprises weighting the respective usage data parameters (211, 212, 213, 214, 215, 311, 312, 313, 314, 315) of the candidate battery historic usage data (310) and the target battery historic usage data (210); wherein the processing circuitry (110) is further configured to: obtain a state of health, SoH, of the initial battery (200); obtain a SoH of one or more of the specific replacement candidate batteries (300); and select a specific replacement candidate battery (300) as the replacement battery (535) further based on a comparison of the SoH of the initial battery (200) to SoHs of the one or more of the specific replacement candidate batteries (300); and wherein obtaining target battery historic usage data (210) of the initial battery (200) comprises: obtaining at least part of the target battery historic usage data (210) from a non-volatile data storage (220) of the initial battery (200) and/or a cloud server (40).

9. An energy storage system (400) comprising at least one battery (200) and processing circuitry (410) configured to store usage data (201) of the at least one battery (200) as target battery historic usage data (210) for use as target battery historic usage data (210) and/or candidate battery historic usage data (310) by the computer system (100) of any one of claims 1 to 8, preferably the energy storage system (400) further comprises a non-volatile data storage (420) configured to store the usage data (201).

10. A vehicle (10) comprising the energy storage system (400) of claim 9.

11. A computer-implemented method (600), comprising:
obtaining (610), by processing circuitry (110) of a computer system (100), target battery historic usage data (210) of an initial battery (200) targeted for replacement;
obtaining (620), by processing circuitry (110) of the computer system (100), a plurality of candidate battery historic usage data (310), each candidate battery historic usage data (310) being associated with a specific replacement candidate battery (300); and
selecting (640), by processing circuitry (110) of the computer system (100), a specific replacement candidate battery (300) as replacement battery (535) for the initial battery (200) based on comparing (630), by processing circuitry (110) of the computer system (100), the target battery historic usage data (210) to the candidate battery historic usage data (310).

12. The computer implemented method (600) of claim 11, wherein comparing (630) the target battery historic usage data (210) to the candidate battery historic usage data (310) comprises:
rating, by processing circuitry (110) of the computer system (100), each replacement candidate battery (300) by determining, by processing circuitry (110) of the computer system (100), a similarity of the candidate battery historic usage data (310) and the target battery historic usage data (210).

13. The computer implemented method (600) of claim 12, wherein the target battery historic usage data (210) and the candidate battery historic usage data (310) each comprises a plurality of different usage data parameters (211, 212, 213, 214, 215, 311, 312, 313, 314, 315), and determining a similarity of the candidate battery historic usage data (310) and the target battery historic usage data (210) comprises:
weighting, by processing circuitry (110) of the computer system (100), the respective usage data parameters (211, 212, 213, 214, 215, 311, 312, 313, 314, 315) of the candidate battery historic usage data (310) and the target battery historic usage data (210).

14. A computer program product (700) comprising program code (810) for performing, when executed by processing circuitry (110), the method (600) of any of claims 11 to 13.

15. A non-transitory computer-readable storage medium (800) comprising instructions (810), which when executed by processing circuitry (110), cause the processing circuitry (110) to perform the method of any of claims 11 to 13.

## Amended claims

### Amended claims in accordance with Rule 137(2) EPC.

1. A computer system (100) comprising processing circuitry (110) configured to:
obtain target battery historic usage data (210) of an initial battery (200) targeted for replacement;
obtain a plurality of candidate battery historic usage data (310), each candidate battery historic usage data (310) being associated with a specific replacement candidate battery (300) from a plurality of replacement candidate batteries (300); and
select a specific replacement candidate battery (300) as a replacement battery (535) from the plurality of replacement candidate batteries (300) for the initial battery (200) based on a comparison of the target battery historic usage data (210) to the candidate battery historic usage data (310).

2. The computer system (100) of claim 1, wherein the target battery historic usage data (210) and the candidate battery historic usage data (310) comprise cycling age data (211, 311) of associated batteries (200, 300), the cycling age data (211, 311) comprising one or more of upper charging limit data, lower discharging limit data, depth of discharge data, peak current data, average current data, energy throughput data, capacity throughput data, temperature data and/or usage time data.

3. The computer system (100) of claim 1 or 2, wherein the target battery historic usage data (210) and the candidate battery historic usage data (310) comprise calendric age data (212, 312) of associated batteries (200, 300), the calendric age data (212, 312) comprising one or more of storage charge level data, storage time data and/or storage temperature data.

4. The computer system (100) of any one of claims 1 to 3, wherein the target battery historic usage data (210) and the candidate battery historic usage data (310) comprises mechanical age data (213, 313) of associated batteries (200, 300), the mechanical age data comprising vibration data and/or shock data.

5. The computer system (100) of any one of claims 1 to 4, wherein the comparison of the target battery historic usage data (210) to the candidate battery historic usage data (310) comprises:
rating each replacement candidate battery (300) by determining a similarity of the candidate battery historic usage data (310) and the target battery historic usage data (210).

6. The computer system (100) of any one of claims 1 to 5, wherein the target battery historic usage data (210) and the candidate battery historic usage data (310) each comprises a plurality of different usage data parameters (211, 212, 213, 214, 215, 311, 312, 313, 314, 315), and determining a similarity of the candidate battery historic usage data (310) and the target battery historic usage data (210) comprises weighting the respective usage data parameters (211, 212, 213, 214, 215, 311, 312, 313, 314, 315) of the candidate battery historic usage data (310) and the target battery historic usage data (210).

7. The computer system (100) of any one of claims 1 to 6, wherein the processing circuitry (110) is further configured to:
obtain a state of health, SoH, of the initial battery (200);
obtain a SoH of one or more of the specific replacement candidate batteries (300); and
select a specific replacement candidate battery (300) as the replacement battery (535) further based on a comparison of the SoH of the initial battery (200) to SoHs of the one or more of the specific replacement candidate batteries (300).

8. The computer system (100) of claim 1, wherein the target battery historic usage data (210) and the candidate battery historic usage data (310) comprise cycling age data (211, 311) of associated batteries (200, 300), the cycling age data (211, 311) comprising one or more of upper charging limit data, lower discharging limit data, depth of discharge data, peak current data, average current data, energy throughput data, capacity throughput data, temperature data and/or usage time data; wherein the target battery historic usage data (210) and the candidate battery historic usage data (310) comprise calendric age data (212, 312) of associated batteries (200, 300), the calendric age data (212, 312) comprising one or more of storage charge level data, storage time data and/or storage temperature data; wherein the target battery historic usage data (210) and the candidate battery historic usage data (310) comprises mechanical age data (213, 313) of associated batteries (200, 300), the mechanical age data comprising vibration data and/or shock data; wherein the comparison of the target battery historic usage data (210) to the candidate battery historic usage data (310) comprises: rating each replacement candidate battery (300) by determining a similarity of the candidate battery historic usage data (310) and the target battery historic usage data (210); wherein the target battery historic usage data (210) and the candidate battery historic usage data (310) each comprises a plurality of different usage data parameters (211, 212, 213, 214, 215, 311, 312, 313, 314, 315), and determining a similarity of the candidate battery historic usage data (310) and the target battery historic usage data (210) comprises weighting the respective usage data parameters (211, 212, 213, 214, 215, 311, 312, 313, 314, 315) of the candidate battery historic usage data (310) and the target battery historic usage data (210); wherein the processing circuitry (110) is further configured to: obtain a state of health, SoH, of the initial battery (200); obtain a SoH of one or more of the specific replacement candidate batteries (300); and select a specific replacement candidate battery (300) as the replacement battery (535) further based on a comparison of the SoH of the initial battery (200) to SoHs of the one or more of the specific replacement candidate batteries (300); and wherein obtaining target battery historic usage data (210) of the initial battery (200) comprises: obtaining at least part of the target battery historic usage data (210) from a non-volatile data storage (220) of the initial battery (200) and/or a cloud server (40).

9. An energy storage system (400) comprising at least one battery (200) and processing circuitry (410) configured to store usage data (201) of the at least one battery (200) as target battery historic usage data (210) for use as target battery historic usage data (210) and/or candidate battery historic usage data (310) by the computer system (100) of any one of claims 1 to 8, preferably the energy storage system (400) further comprises a non-volatile data storage (420) configured to store the usage data (201).

10. A vehicle (10) comprising the energy storage system (400) of claim 9.

11. A computer-implemented method (600), comprising:
obtaining (610), by processing circuitry (110) of a computer system (100), target battery historic usage data (210) of an initial battery (200) targeted for replacement;
obtaining (620), by processing circuitry (110) of the computer system (100), a plurality of candidate battery historic usage data (310), each candidate battery historic usage data (310) being associated with a specific replacement candidate battery (300) from a plurality of replacement candidate batteries (300); and
selecting (640), by processing circuitry (110) of the computer system (100), a specific replacement candidate battery (300) from the plurality of replacement candidate batteries (300) as a replacement battery (535) for the initial battery (200) based on comparing (630), by processing circuitry (110) of the computer system (100), the target battery historic usage data (210) to the candidate battery historic usage data (310).

12. The computer implemented method (600) of claim 11, wherein comparing (630) the target battery historic usage data (210) to the candidate battery historic usage data (310) comprises:
rating, by processing circuitry (110) of the computer system (100), each replacement candidate battery (300) by determining, by processing circuitry (110) of the computer system (100), a similarity of the candidate battery historic usage data (310) and the target battery historic usage data (210).

13. The computer implemented method (600) of claim 12, wherein the target battery historic usage data (210) and the candidate battery historic usage data (310) each comprises a plurality of different usage data parameters (211, 212, 213, 214, 215, 311, 312, 313, 314, 315), and determining a similarity of the candidate battery historic usage data (310) and the target battery historic usage data (210) comprises:
weighting, by processing circuitry (110) of the computer system (100), the respective usage data parameters (211, 212, 213, 214, 215, 311, 312, 313, 314, 315) of the candidate battery historic usage data (310) and the target battery historic usage data (210).

14. A computer program product (700) comprising program code (810) for performing, when executed by processing circuitry (110), the method (600) of any of claims 11 to 13.

15. A non-transitory computer-readable storage medium (800) comprising instructions (810), which when executed by processing circuitry (110), cause the processing circuitry (110) to perform the method of any of claims 11 to 13.
